# EUROPÄISCHE PATENTSCHRIFT

(11) **EP 1 186 482 B1**
(45) Veröffentlichungstag und Bekanntmachung des Hinweises auf die Patenterteilung: **09.11.2005**
(21) Anmeldenummer: 01121498.8
(22) Anmeldetag: 08.09.2001
(51) Int. Cl.: B60R 21/13

(54) **Fahrzeugfestes Überrollschutzsystem-Gehäuse mit aus- und einfahrbar geführtem Überrollkörper**
Cartridge for a rollover protection system guiding an expandable and retractable rollbar
Cartouche pour arceau de sécurité guidant un arceau déployable et rétractable

(30) Priorität: 12.09.2000 DE 10044929
(43) Veröffentlichungstag der Anmeldung: 13.03.2002
(73) Patentinhaber: ISE Innomotive Systems Europe GmbH, 51702 Bergneustadt (DE)
(72) Erfinder: Janisch, Mirko, 53797 Lohmar (DE)
(74) Vertreter: Fuchs Mehler Weiss & Fritzsche

(56) Entgegenhaltungen:
- EP-A- 0 752 344
- DE-A- 19 712 955
- DE-A- 19 750 457
- DE-C- 19 925 520

## Beschreibung

Die Erfindung bezieht sich auf ein Überrollschutzsystem, mit einem in einem fahrzeugfesten Gehäuse aus- und einfahrbar geführten Überrollkörper, der sensorgesteuert im Gefahrenfall schnell in eine obere Position ausfahrbar ist, und mit einer im oberen Positionsbereich in Wirkeingriff tretenden Wiedereinfahrsperre in Form einer Verriegelungseinrichtung bestehend aus gezahnten Verriegelungselementen, von denen eines fahrzeugfest angebracht ist und ein anderes mit dem Überrollkörper in Verbindung steht.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.
Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied gebildet ist.

Die Verriegelungseinrichtung wiederum besteht typischerweise aus einer schwenkbar angelenkten, federvorgespannten Rastklinke mit Zahnsegmenten und einer feststehenden Zahnleiste, einem Rastdorn oder dergleichen, wobei ein Element mit dem Überrollbügel und das andere fahrzeugfest verbunden ist.

Eine gattungsgemäße Kassetten-Konstruktion eines Überrollschutzsystems mit einem Rastdorn zeigt beispielsweise die DE 43 42 400 A 1. Bei einem Überrollschutzsystem mit einer Zahnleiste als ein Verriegelungselement, kann diese als separates Teil angebracht werden, wie es die EP-A-752 344 zeigt. Es ist auch bekannt (DE 197 12 955 A1) die Zahnleiste einstückig mit dem Schenkelrohr des Überrollbügels auszubilden.

Die bekannte Verriegelungseinrichtung mit schwenkbar angelenkter Rastklinke und Zahnleiste bzw. Rastdorn ist typischerweise nur einmal im Überrollschutzsystem vorhanden und dabei asymmetrisch in Bezug auf den Überrollkörper angeordnet. Dadurch muß diese einzige Verriegelungseinrichtung auf die gesamten bei einem Überschlag auftretenden Kräfte ausgelegt werden, wobei berücksichtigt werden muß, daß die Fähigkeit für die Aufnahme von Kräften asymmetrisch ist. Bei einer Seitenbelastung, bei der die Rastklinke im verriegelnden Sinne gegen die Zahnleiste bzw. den Rastdorn gedrückt wird, ist die Belastbarkeit größer als bei einer Seitenbelastung, bei der die Rastklinke im entriegelnden Sinne von der Zahnleiste bzw. dem Rastdorn weggedrückt wird.

Der Erfindung liegt die Aufgabe zugrunde, das eingangs bezeichnete Überrollschutzsystem einsichtlich der Verriegelungseinrichtung so auszubilden, daß die bei einem Überschlag auftretenden Kräfte symmetrisch verteilt aufgenommen werden können.

Dies gelingt ausgehend von dem eingangs bezeichneten Überrollschutzsystem mit einem in einem fahrzeugfesten Gehäuse aus- und einfahrbar geführten Überrollkörper, der sensorgesteuert im Gefahrenfall schnell in eine obere Position ausfahrbar ist, und mit einer im oberen Positionsbereich in Wirkeingriff tretenden Wiedereinfahrsperre in Form einer Verriegelungseinrichtung, bestehend aus gezahnten Verriegelungselementen von denen eines fahrzeugfest angebracht ist und ein anderes mit dem Überrollkörper in Verbindung steht, erfindungsgemäß dadurch, daß das mit dem Überrollkörper in Verbindung stehende Verriegelungselement durch zwei sich mindestens über die Ausfahrlänge erstreckende Zahnleisten gebildet ist, die beabstandet am Überrollkörper angebracht sind, daß das fahrzeugfest angebrachte Verriegelungselement durch zwei im Gehäuse drehbar gelagerte, je einer Zahnleiste zugeordnete Zahnräder gebildet ist, die im ständigen Wirkeingriff mit der zugehörigen Zahnleiste stehen, und daß ein drittes Sperr-Verriegelungselement vorgesehen ist, das mittig zwischen den Zahnrädern im Gehäuse, verschiebbar in Verfahrrichtung des Überrollkörpers, angebracht ist, und an den Zahnrädern gegenüberstehenden Flächen Zahnsegmente besitzt, die im ausgefahrerem Zustand des Überrollkörpers in verriegelnden Wirkeingriff mit den Zahnrädern bringbar sind.

Durch die erfindungsgemäßen Maßnahmen wird mit großem Vorteil eine ausgewogene Belastung der Verriegelungseinrichtung bei einem Überschlag erzielt. Dadurch, daß an dem Sperr-Verriegelungselement symmetrisch zwei Verriegelungssystme mit jeweils einer Zahnrad/Zahnleisten-Kombination angreifen, braucht jedes Verriegelungssystem nur auf die hälftige Last ausgelegt werden. Bei einer Seitenbelastung des Überrollkörpers findet zudem ein Kraftausgleich über das Sperr-Verriegelungselement statt, d.h. in dem Maße, wie das eine Verriegelungssystem Zahnrad/Zahnleiste von dem einem Zahnsegment des Sperr-Verriegelungselementes weggedrückt wird, wird das andere Verriegelungssystem Zahnrad/Zahnleiste gegen das gegenüberliegende Zahnsegment des Sperr-Verriegelungselementes angedrückt, so daß die Verriegelungsfähigkeit insgesamt voll enthalten bleibt.

Ferner erlauben die erfindungsgemäßen Maßnahmen eine Verriegelung in jeder ausgefahrenen Position.

Die konstruktive Gestaltung des erfindungsgemäßen Verriegelungssystems im Detail hängt maßgebend von der konstruktiven Auslegung des Überrollschutzsystems als solchem ab.

Ausgehend von einem Überrollschutzsystem mit einem Überrollkörper in Form eines U-förmigen Überrollbügels, dessen Schenkelrohre in einem am Gehäuse befestigten Führungsblock geführt sind, ist eine sehr vorteilhafte, einfache Gestaltung des Verriegelungssystems möglich, wenn die Zahnleisten jeweils auf der Innenseite der Schenkelrohre angebracht sind und im Führungsblock einmal die Zahnräder drehbeweglich gelagert sind und zum anderen das Sperr-Verriegelungselement verschiebbar gehaltert ist.

Die Zahnleisten können dabei als separate Teile an den Schenkelrohren befestigt sein. Vorteilhafter, im Hinblick auf den konstruktiven Aufwand, ist es jedoch, wenn die Zahnleisten einstückig an den Schenkelrohren angeformt sind.

Eine besonders vorteilhafte, weil konstruktiv einfache Konstruktion läßt sich gemäß einer Weiterbildung der Erfindung erzielen, wenn der Führungsblock durch einen Profilkörper gebildet ist, der Durchgangsöffnungen für die Führung der Schenkelrohre, Kammern für die drehbewegliche Lagerung der Zahnräder und einen Quersteg aufweist, der sich über eine vorgegebene Höhe des Profilkörpers erstreckt und an beiden Stegseiten Gleitflächen besitzt, und der ein gabelförmiges Sperr-Zahnsegment aufnimmt, dessen Gabelschenkel mit der Innenseite im führenden Gleitkontakt mit den Gleitflächen des Quersteges sind und auf der Außenseite, den Zahnrädern zugewandt, jeweils eine Zahnleiste besitzen, sowie dessen Gabelkopf mittels einer Druckfeder über einen vorgegebenen Hub (X) im Führungskörper gehaltert ist, wobei das untere Ende des Quersteges den Anschlag für die Innenfläche des Gabelkopfes zwecks Begrenzung der Bewegung des Sperr-Zahnsegmentes nach oben bildet.

Um ein manuelles Reversieren des ausgefahreren Überrollkörpers zu gewährleisten, ist gemäß einer Ausgestaltung der Erfindung das Überrollschutzsystem so ausgebildet, daß der Quersteg eine Durchgangsbohrung besitzt, in der eine Stange aufnehmbar ist, die mit einem Ende in dem Gabelkopf des Sperr-Zahnsegmentes befestigt ist und die am anderen, freien Ende ein Betätigungselement für ein manuelles Niederdrücken der Stange und des Sperr-Zahnsegmentes besitzt.

Weitere ausgestaltende Merkmale ergeben sich anhand der Beschreibung eines in den Zeichnungen dargestellten Ausführungsbeispieles.

Es zeigen:
- Fig. 1: in einer zum Teil geschnittenen Vorderansicht das mit einer erfindungsgemäß ausgebildeten Verriegelungseinrichtung versehene Überrollschutzsystem im eingefahrenen Zustand des Überrollkörpers,
- Fig. 2: das Überrollschutzsystem in einer Ansicht entsprechend Fig. 1, jedoch mit ausgefahrenem Überrollbügel ohne Belastung,
- Fig. 3: das Überrollschutzsystem in einer Ansicht entsprechend Fig. 1 mit ausgefahrenem Überrollkörper, auf den eine äußere Last "F" in Pfeilrichtung wirkt,
- Fig. 4: in einer vergrößerten Ausschnitt-Darstellung aus Fig. 1 den näheren Aufbau des erfindungsgemäßen Verriegelungssystems mit den beiden Zahnrad/Zahnleisten-Systemen, die an einem zentralen Sperr-Verriegelungselement angreifen,
- Fig. 5: eine Querschnittansicht durch das Überrollschutzsystem, genommen entlang der in Fig. 4 gezeigten Schnittlinie,
- Fig. 6: in einer gegenüber der Fig. 4 noch stärker vergrößerten Ausschnitt-Darstellung den näheren Aufbau des Verriegelungssystems im Detail, in Verbindung mit einem fahrzeugfesten Führungsblock des Überrollschutzsystems, der Verriegelungselemente aufnimmt,
- Fig. 7: in einer schematischen Längsschnitt-Darstellung einen Ausschnitt aus dem Führungskörper, der einen Quersteg für die Aufnahme des zentralen Sperr-Verriegelungselementes besitzt,
- Fig. 8: eine Draufsicht auf den Führungskörper nach Fig. 7,
- Fig. 9: in einer Längsschnitt-Darstellung in Verbindung mit einer Querschnitt-Ansicht im Figurenteil A die Ausbildung des zentralen Sperr-Verriegelungselementes als gabelförmiger Formkörper, der mit den Gabelschenkel auf dem Quersteg geführt wird, und
- Fig. 10: in einem schematischen Längsschnitt in Verbindung mit einem Querschnitt im Figurenteil A das Zusammenwirken zwischen Quersteg und gabelförmigen Sperr-Verriegelungselement im montierten Zustand beider Teile.

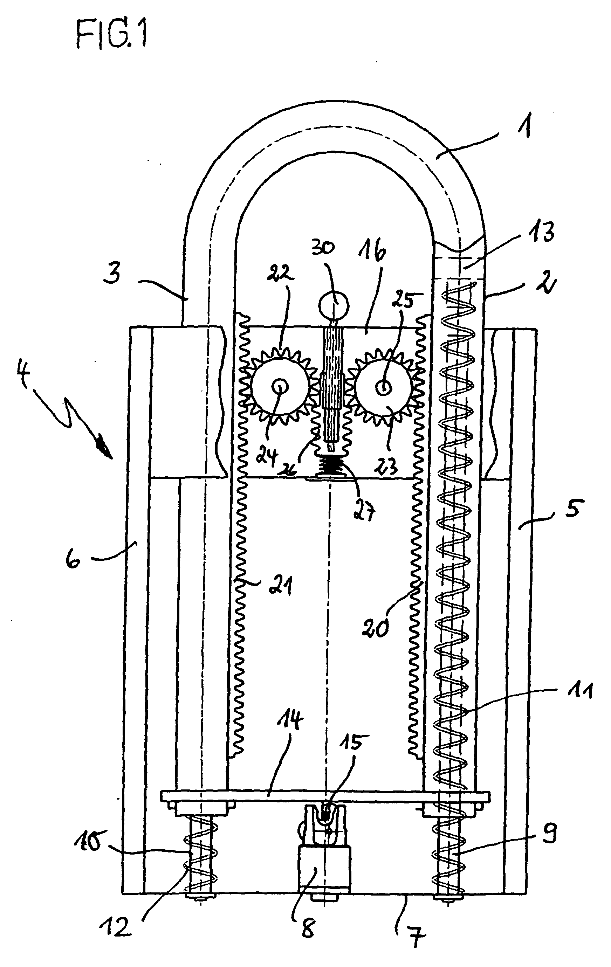

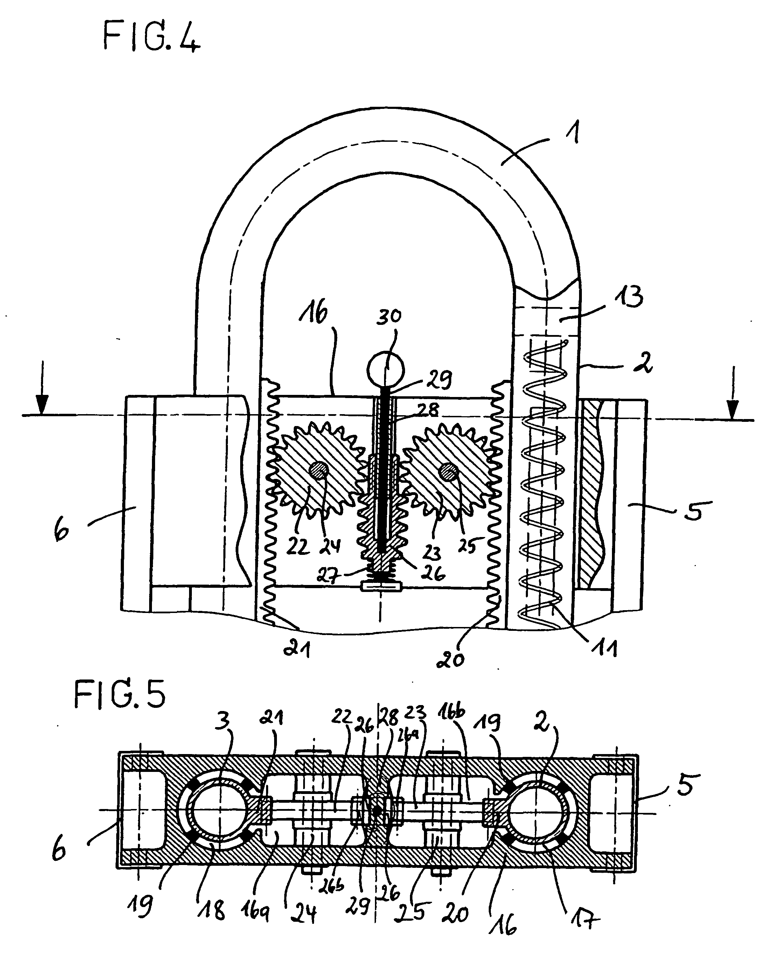

Die Figuren 1-6 zeigen ein Ausführungsbeispiel der Erfindung in verschiedenen Darstellungen und Zuständen. Das dargestellte Überrollsystem besitzt als Überrollkörper einen U-förmigen Überrollbügel 1, dessen beide Schenkelrohre 2,3 in einem kassettenartigen, fahrzeugfest angebrachten Gehäuse 4 geführt aufgenommen sind. Dieses Gehäuse besitzt zwei U-förmige Seiten-Profile 5,6 (Fig. 5) und ein Bodenblech 7. Am Bodenblech 9 sind einmal ein sensorgesteuerter Aktuator 8 für das Halten des Überrollbügels 1 im Ruhezustand (Fig. 1) sowie zwei Federführungsbolzen 9,10 angebracht, die jeweils eine Druckfeder 11,12 führen, die sich unten am Bodenblech 7 und oben über eine Druckscheibe 13 am oberen Ende der Schenkelrohre 2,3 abstützen. Die unteren Enden der Schenkelrohre 2,3 sind über eine Traverse 14 verbunden, die vorzugsweise ein Profilkörper ist und in den Seiten-Profilen 5,6 geführt wird. Sie weist ein Halteglied 15 auf, das in lösbarem Wirkeingriff mit dem Aktuator 8 bringbar ist. Am oberen Ende der Seiten-Profile 5,6 ist ein Führungsblock 16 fest angebracht, der durch einen Profilkörper mit einem Profil entsprechend Fig. 5 gebildet wird. Er weist zwei durchgehende Öffnungen 17,18 auf, in denen die Schenkelrohre 2,3 mittels symbolisch angedeuteter Führungskörper 19 geführt sind.

Dieser Aufbau des Überrollschutzsystems ist an sich bekannt bzw. zum Teil Gegenstand älterer Anmeldungen und stellt nur ein Ausführungsbeispiel eines Systems dar, bei dem die Erfindung, die neuartige Verriegelungseinrichtung, angewendet werden soll, die im folgenden beschrieben wird.

Die erfindungsgemäße Verriegelungseinrichtung für die Sperre des ausgefahrenen Überrollbügels gegen ungewolltes Wiedereindrücken besteht aus drei Elementen.

Das erste Verriegelungselement besteht aus zwei Zahnleisten 20,21, die jeweils an einem Schenkelrohr 2 bzw. 3 angebracht sind.Sie erstrecken sich mindestens über den Verfahrweg des Überrollbügels 1, und können, wie in der eingangs zitierten DE 197 12 955 A1 dargestellt, entweder als separate Teile mit den Schenkelrohren mechanisch verbunden werden, z.B. durch Schrauben oder Verschweißen, oder einstückig mit den Schenkelrohren ausgeformt sein.

Das zweite Verriegelungselement weist zwei Zahnräder 22,23 auf, die jeweils auf einer im Führungsblock 16 in einer Hohlkammer drehbar gelagerten Welle 24, 25 befestigt sind (Fig. 5). Die Zahnräder 22,23 sind dabei im ständigen Wirkeingriff mit den Zahnleisten 20,21.

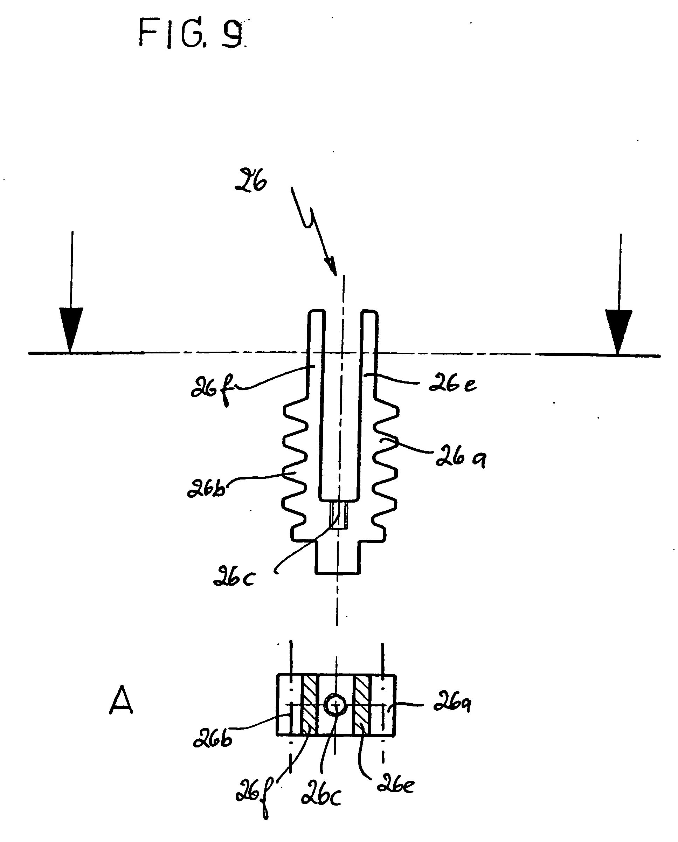

Das dritte Verriegelungselement bildet ein mittig im Führungsblock 16 angeordnetes Sperr-Zahnsegment 26, das gabelförmig ausgebildet ist (Fig. 9) und an den beiden gegenüberliegenden, den Zahnrädern 22,23 zugewandten Stirnseiten als Zahnleiste 26a,26b ausgebildet ist, sowie eine Bohrung 26c besitzt. Dieses Sperr-Zahnsegment 26 ist einmal mit dem Gabelkopf über einen Zapfen 26d in einer sich am Boden des Führungsblocks 16 abstützenden Feder 27 und ist andererseits mit den beiden Gabelschenkeln 26e,26f in einem Quersteg 28 des Führungsblockes 16 gleitend gehaltert. An diesem Sperr-Zahnsegment 26 ist ferner eine Stange 29 mit einem Knauf 30 für ein manuelles Niederdrücken des Sperr-Zahnsegmentes 26 befestigt.

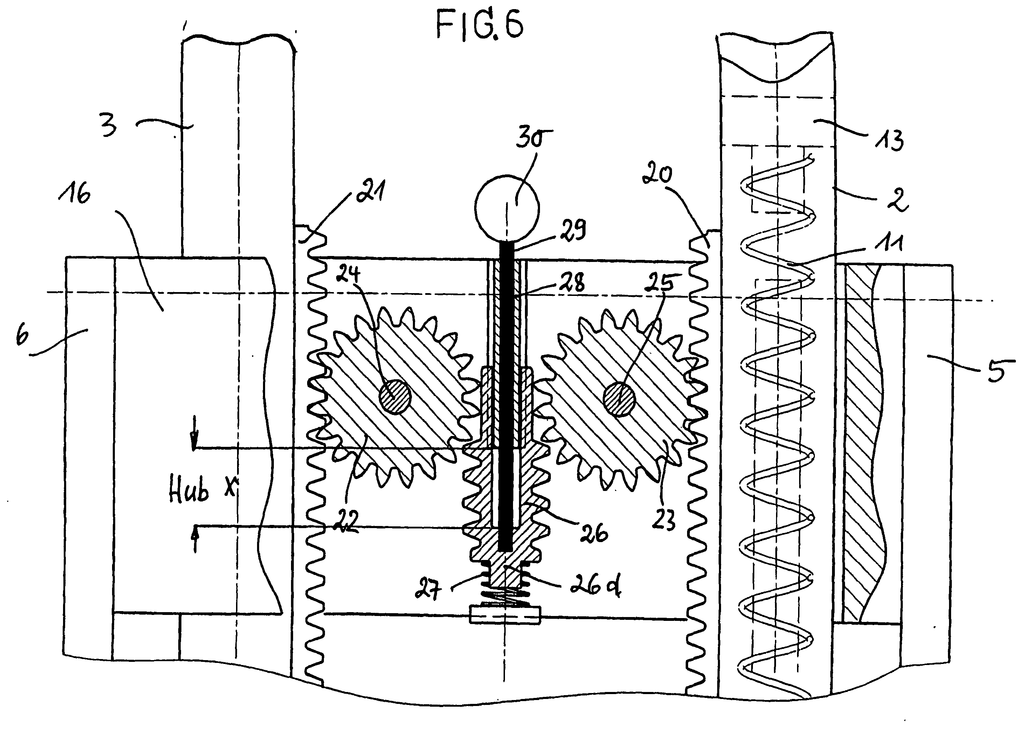

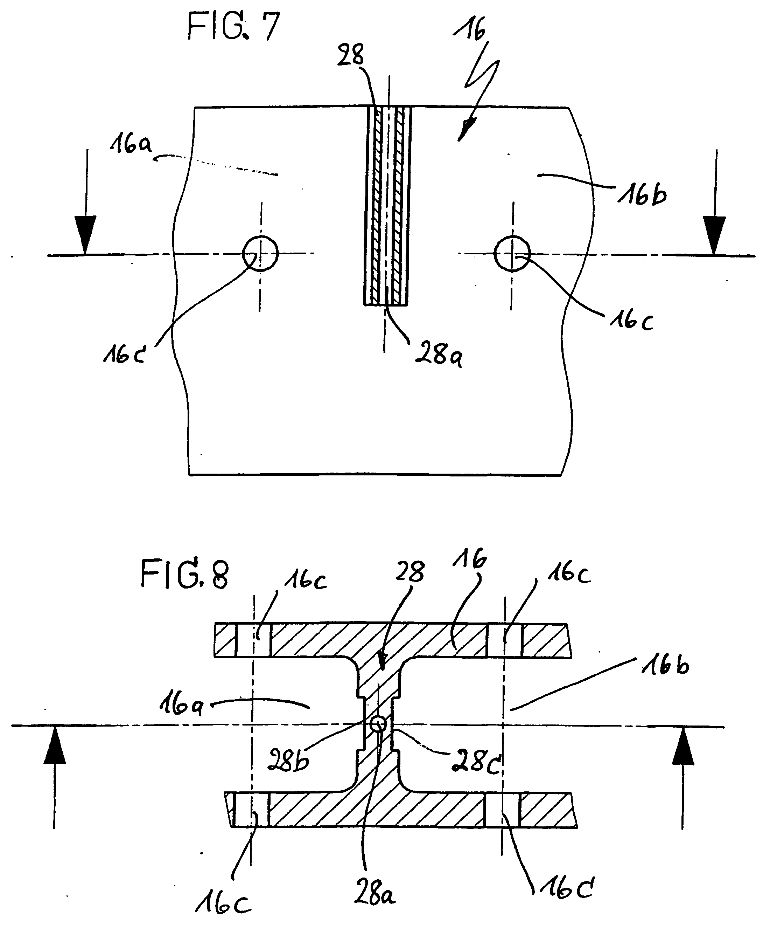

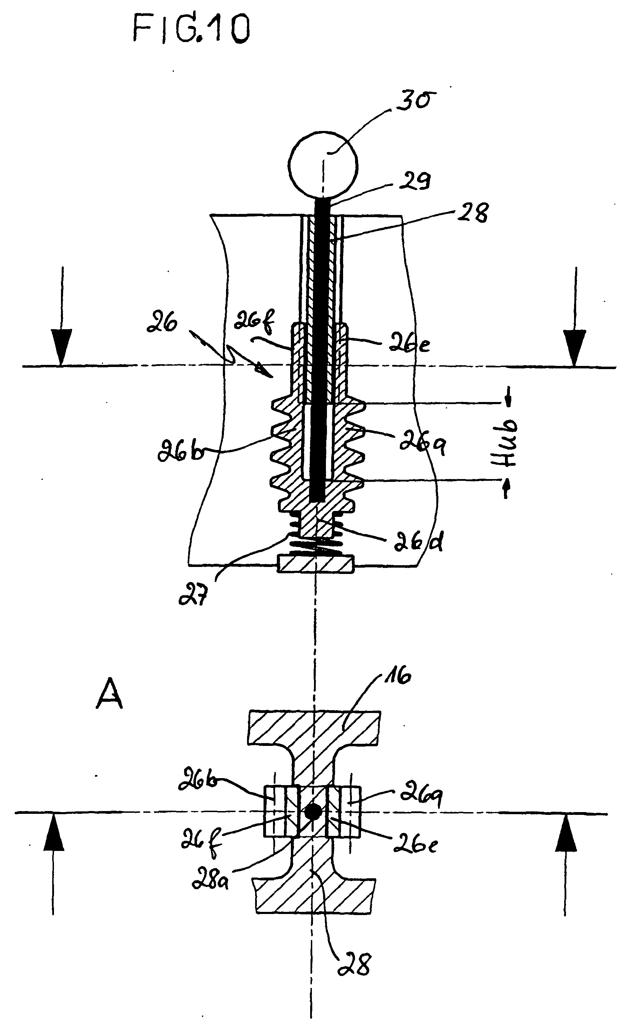

Der Quersteg 28 ist, wie die schematische Längsschnitt-Darstellung der Fig. 7 zeigt, im unteren Teil beispielsweise weggefräst, um im Führungsblock 16 Raum für den Hub "X" und den Gabelkopf mit der Feder 27 zu haben (Fig. 6). Er besitzt mittig eine Bohrung 28a sowie an zwei gegenüberliegenden Seiten, wie die Querschnitts-Ansicht nach Fig. 8 zeigt, zwei Führungsflächen 28b,28c als führende Gleitflächen für die Gabelschenkel 26e,26f des gabelförmigen Sperr-Zahnsegmentes 26 (Fig. 9). Außerdem sind Bohrungen 16 c für die Lagerung der Zahnradwellen 24, 25 vorgesehen. Die Figur 10 mit dem Figurenteil A zeigen dabei den zusammengebauten Zustand, bei dem das gabelförmige Sperr-Zahnsegment 26 mit seinen beiden Gabelschenkel 26e,26f an dem Quersteg 28 gleitend aufgenommen ist, zusammen mit der die Bohrung 28a des Quersteges durchdringenden Stange 29, die den Hand-Knauf 30 trägt, und die in der Gewindebohrung 26c des Sperr-Zahnsegmentes befestigt ist (Fig. 9).

Die erfindungsgemäße Verriegelungseinrichtung arbeitet wie folgt:

In der Ruhelage des Überrollbügels 1, die in Fig. 1 dargestellt ist, ist das Halteglied 15 im haltenden Wirkeingriff mit dem Aktuator 8, so daß der Überrollbügel 1 gegen die Kraft der Druckfedern 11 und 12 im eingefahreren Zustand bleibt. Die Zahnräder 22 und 23 der Verriegelungseinrichtung sind dabei nicht im Wirkeingriff mit dem Sperr-Zahnsegment 26, d.h. können sich frei drehen, sobald der Überrollbügel ausfährt.

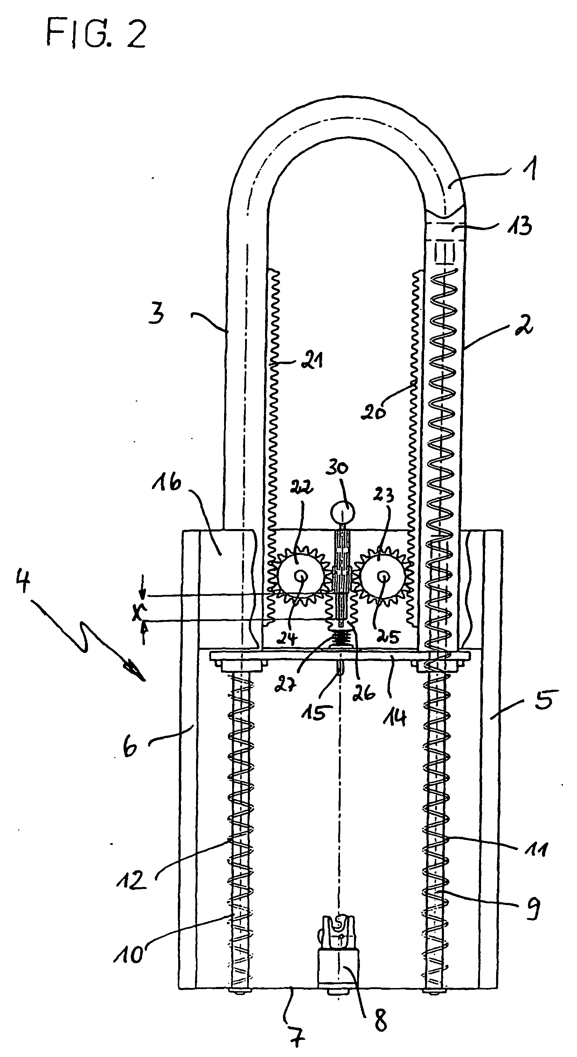

Erfolgt eine Auslösung des Aktuators 8, so gibt dieser das Halteglied 15 frei, wodurch der Überrollbügel 1 mit seiner Traverse 14 durch die Druckfedern im Millisekunden-Bereich nach oben ausgefahren wird. Da die Zahnräder 22,23 mit den Zahnleisten 20,21 im Wirkeingriff stehen, sich jedoch gegenüber dem mittleren Sperr-Zahnsegment 26 frei drehen können, setzen die Zahnräder daher der Ausfahrbewegung keinen Widerstand entgegen. Diesen ausgefahrenen Zustand ohne äußere Belastung zeigt dabei die Fig. 2.

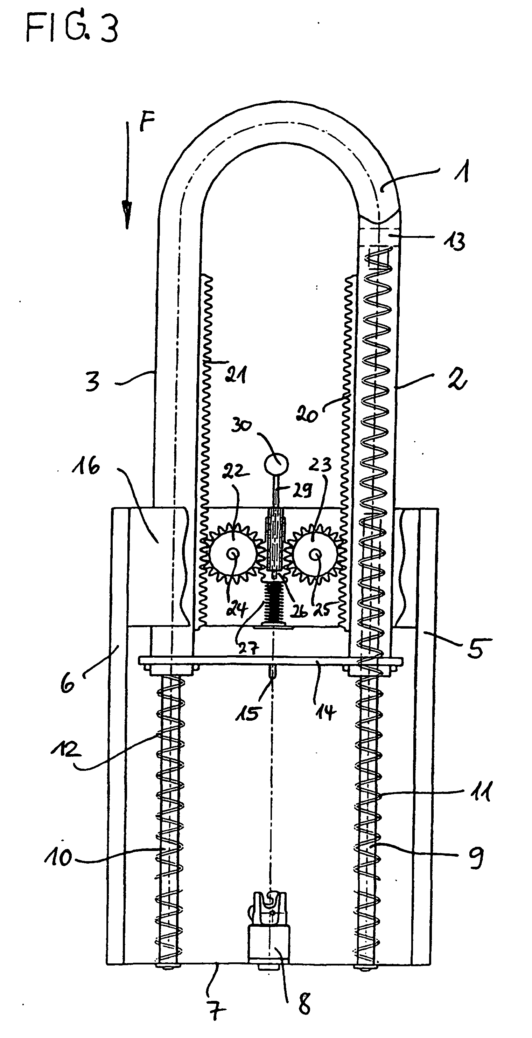

Erfolgt nun eine externe Belastung auf den Überrollbügel, die den Bügel wieder in das Gehäuse 4 einzudrücken versucht, dann fährt dieser unter der Druckbelastung einen kleinen Weg, den Hub "X", zurück, d.h. bis die Innenfläche des Gabelkopfes am unteren Ende des Quersteges anschlägt. Dabei dreht sich das Zahnrad 22 gegen den Uhrzeigersinn und das Zahnrad 23 im Uhrzeigersinn mit. Sie kommen dadurch in Wirkeingriff mit den Zahnleisten 26a und 26b des Sperr-Zahnsegmentes 26, welches auch unter der Wirkung der Druckfeder 27 nach oben geschoben wird. Dieser Verriegelungs-Zustand ist in Fig. 3 dargestellt. Das Sperr-Zahnsegment 26 verhindert in diesem Zustand eine Drehung der Zahnräder 22,23 und damit eine Einfahrbewegung des Überrollbügels 1, der damit verriegelt ist. Die bei einem Überschlag aufzunehmenden Kräfte werden mit Vorteil auf beide Zahnräder symmetrisch verteilt.

Zur Reversierung des ausgefahreren Überrollbügels wird das Sperr-Zahnsegment 26 manuell durch Drücken der Stange 29 mittels des Hand-Knaufes 30 gegen die Kraft der Feder 27 nach unten verschoben. Der Überrollbügel 1 fährt daher zwangsläufig durch die koppelnde Wirkung der Zahnräder 22,23 etwas nach oben. Der Wirkeingriff zwischen den Zahnrädern und dem Sperr-Zahnsegment 26 wird dadurch aufgehoben und der Überrollbügel 1 kann dann manuell eingeschoben werden.

## Patentansprüche

1. Überrollschutzsystem, mit einem in einem fahrzeugfesten Gehäuse (4) aus- und einfahrbar geführten Überrollkörper (1), der sensorgesteuert im Gefahrenfall schnell in eine obere Position ausfahrbar ist, und mit einer im oberen Positionsbereich in Wirkeingriff tretenden Wiedereinfahrsperre in Form einer Verriegelungseinrichtung bestehend aus gezahnten Verriegelungselementen, von denen eines fahrzeugfest angebracht ist und ein anderes mit dem Überrollkörper (1) in Verbindung steht, **dadurch gekennzeichnet, daß** das mit dem Überrollkörper (1) in Verbindung stehende Verriegelungselement durch zwei sich mindestens über die Ausfahrlänge erstreckende Zahnleisten (20,21)gebildet ist, die beabstandet am Überrollkörper (1) angebracht sind, daß das fahrzeugfest angebrachte Verriegelungselement durch zwei im Gehäuse (4) drehbar gelagerte, je einer Zahnleiste (20,21) zugeordnete Zahnräder (22,23) gebildet ist, die im ständigen Wirkeingriff mit der zugehörigen Zahnleiste stehen, und daß ein drittes Sperr-Verriegelungselement (26) vorgesehen ist, das mittig zwischen den Zahnrädern (22,23) im Gehäuse (4), verschiebbar in Verfahrrichtung des Überrollkörpers, angebracht ist, und an den Zahnrädern (22,23) gegenüberstehenden Flächen Zahnsegmente (26a,26b) besitzt, die im ausgefahrerem Zustand des Überrollkörpers (1) in verriegelnden Wirkeingriff mit den Zahnrädern (22,23) bringbar sind.

2. Überrollschutzsystem nach Anspruch 1, mit einem Überrollkörper in Form eines U-förmigen Überrollbügels, dessen Schenkelrohre (2,3) in einem am Gehäuse (4) befestigten Führungsblock (16) geführt sind, **dadurch gekennzeichnet, daß** die Zahnleisten (20,21) jeweils auf der Innenseite der Schenkelrohre (2,3) angebracht sind und im Führungsblock (16) einmal die Zahnräder (22,23) drehbeweglich gelagert sind und zum anderen das Sperr-Verriegelungselement (26) verschiebbar gehaltert ist.

3. Überrollschutzsystem nach Anspruch 2, **dadurch gekennzeichnet, daß** die Zahnleisten einstückig an den Schenkelrohren (2,3) angeformt sind.

4. Überrollschutzsystem nach Anspruch 2 oder 3, **dadurch gekennzeichnet, daß** der Führungsblock (16) durch einen Profilkörper gebildet ist, der Durchgangsöffnungen (17,18) für die Führung der Schenkelrohre (2,3), Kammern (16a,16b) für die drehbewegliche Lagerung der Zahnräder (22,23) und einen Quersteg (28) aufweist, der sich über eine vorgegebene Höhe des Profilkörpers erstreckt und an beiden Stegseiten Gleitflächen (28b,28c) besitzt, und der ein gabelförmiges Sperr-Zahnsegment (26) aufnimmt, dessen Gabelschenkel (26e,26f) mit der Innenseite im führenden Gleitkontakt mit den Gleitflächen (26b,26c) des Quersteges (28) sind und auf der Außenseite, den Zahnrädern (22,23) zugewandt, jeweils eine Zahnleiste (26a,26b) besitzen, sowie dessen Gabelkopf mittels einer Druckfeder (27) über einen vorgegebenen Hub (X) elastisch nachgebend im Führungskörper (1) gehaltert ist, wobei das untere Ende des Quersteges (28) den Anschlag für die Innenfläche des Gabelkopfes zwecks Begrenzung der Bewegung des Sperr-Zahnsegmentes (26) nach oben bildet.

5. Überrollschutzsystem nach Anspruch 4, **dadurch gekennzeichnet, daß** der Quersteg (28) eine Durchgangsbohrung (28a) besitzt, in der eine Stange (29) aufnehmbar ist, die mit einem Ende in dem Gabelkopf des Sperr-Zahnsegmentes (26) befestigt ist und die am anderen, freien Ende ein Betätigungselement (30) für ein manuelles Niederdrücken der Stange (29) und des Sperr-Zahnsegmentes (26) besitzt.

## Claims

1. Rollover protection system, having a rollover body (1) which is guided in an extendable and retractable manner in a housing (4) fixed on the vehicle and, controlled by a sensor, can be extended rapidly into an upper position in the event of a hazard, and having a retraction catch which comes into operative engagement in the upper position and is in the form of a locking device comprising toothed locking elements, of which one is fixed on the vehicle and another is connected to the rollover body (1), **characterized in that** the locking element which is connected to the rollover body (1) is formed by two toothed strips (20, 21) which extend at least over the extension length and are fitted spaced apart on the rollover body (1), **in that** the locking element fixed on the vehicle is formed by two toothed wheels (22, 23), which are mounted rotatably in the housing (4), are respectively assigned to a toothed strip (20, 21) and are in continuous operative engagement with the associated toothed strip, and **in that** there is a third catch-type locking element (26), which is fitted centrally between the toothed wheels (22, 23) in the housing (4), in a manner such that it is displaceable in the direction of movement of the rollover body, and on the surfaces opposite the toothed wheels (22, 23) has toothed segments (26a, 26b) which can be brought into locking operative engagement with the toothed wheels (22, 23) in the extended state of the rollover body (1).

2. Rollover protection system according to Claim 1, having a rollover body in the form of a U-shaped rollbar, the leg tubes (2, 3) of which are guided in a guide block (16) fastened to the housing (4), **characterized in that** the toothed strips (20, 21) are fitted in each case on the inside of the leg tubes (2, 3) and, on the one hand, the toothed wheels (22, 23) are mounted rotatably and, on the other hand, the catch-type locking element (26) is secured displaceably, in the guide block (16).

3. Rollover protection system according to Claim 2, **characterized in that** the toothed strips are moulded in a single piece on the leg tubes (2, 3).

4. Rollover protection system according to Claim 2 or 3, **characterized in that** the guide block (16) is formed by a profiled body which has passage openings (17, 18) for guiding the leg tubes (2, 3), chambers (16a, 16b) for the rotatable mounting of the toothed wheels (22, 23) and a transverse web (28), which extends over a predetermined height of the profiled body and has sliding surfaces (28b, 28c) on both sides of the web, and which receives a forked catch-type toothed segment (26), the fork limbs (26e, 26f) of which, on the inside, are in guiding sliding contact with the sliding surfaces (26b, 26c) of the transverse web (28) and on the outside, facing the toothed wheels (22, 23), in each case have a toothed strip (26a, 26b), and the fork head of which is secured by means of a compression spring (27) in a manner such that it yields elastically over a predetermined stroke (X) in the guide body (1), with the lower end of the transverse web (28) forming the stop for the inner surface of the fork head for the purpose of limiting the movement of the catch-type toothed segment (26) upwards.

5. Rollover protection system according to Claim 4, **characterized in that** the transverse web (28) has a passage hole (28a), in which a rod (29) can be accommodated, which rod is fastened by one end in the fork head of the catch-type toothed segment (26) and, at the other, free end, has an actuating element (30) for a manual pressing-down of the rod (29) and of the catch-type toothed segment (26).

## Revendications

1. Système de protection en cas de tonneau, comportant un corps de sécurité en cas de tonneau (1) guidé en sortie et en entrée dans un boîtier (4) solidaire d'un véhicule, qui, en cas de danger, peut être rapidement déployé en une position supérieure sous l'action d'un capteur, et comportant un dispositif de blocage anti-reploiement venant en prise fonctionnelle dans la zone de position supérieure, sous la forme d'un dispositif de verrouillage constitué d'éléments de verrouillage dentés, dont l'un est monté solidaire du véhicule et l'autre est en liaison avec le corps de sécurité (1), **caractérisé par le fait que** l'élément de verrouillage se trouvant en liaison avec le corps de sécurité est constitué par deux crémaillères (20, 21) s'étendant au moins sur la longueur de déploiement, qui sont montées écartées sur le corps de sécurité (1), que l'élément de verrouillage monté fixe sur le véhicule est constitué par deux roues dentées montées rotatives dans le logement (4), chacune associée à une crémaillère (20, 21), qui se trouvent en prise permanente avec la crémaillère associée, et qu'il est prévu un troisième élément de verrouillage de blocage (26) qui est monté au milieu entre les roues dentées dans le boîtier (4), de façon coulissante en direction d'avance du corps de sécurité, et comporte des segments dentés (26a, 26b) sur les surfaces opposées aux roues dentées (22, 23), qui, à l'état déployé du corps de sécurité (1), peuvent être amenés en prise de verrouillage avec les roues dentées (22, 23).

2. Système de protection en cas de tonneau selon la revendication 1, avec un corps de sécurité sous forme d'un arceau de sécurité en forme de U, dont les tubes de branches (2, 3) sont guidés dans un bloc de guidage solidaire du boîtier (4), **caractérisé par le fait que** les crémaillères (20, 21) sont respectivement montées sur le côté interne des tubes de branches (2, 3) et, dans le bloc de guidage (16), d'une part, les roues dentées (22, 23) sont montées rotatives et, d'autre part, l'élément de verrouillage de blocage (26) est monté coulissant.

3. Système de protection en cas de tonneau selon la revendication 2, **caractérisé par le fait que** les crémaillères seront formées d'un seul tenant sur les tubes de branches (2, 3).

4. Système de protection en cas de tonneau selon l'une des revendications 2 et 3, **caractérisé par le fait que** le bloc de guidage (16) est constitué par un corps profilé, comportant des ouvertures traversantes (17, 18) pour le guidage des tubes de branches (2, 3), des chambres (16a, 16b) pour le support rotatif des roues dentées (22, 23) et une entretoise transversale (28), qui s'étend sur une hauteur déterminée du corps profilé et comporte des surfaces de glissement (28b, 28c) des deux côtés de l'entretoise, et qui comporte un segment denté de blocage fourchu (26), dont les branches de fourche, par le côté interne, sont en contact glissant de guidage avec les surfaces de glissement (26b, 26c) de l'entretoise transversale (28), et dont les côtés externes, tournés vers les roues dentées (22, 23), comportent chacun une crémaillère (26a, 26b), de sorte que sa tête de fourche est maintenue, au moyen d'un ressort de poussée (27), en rappel élastique sur un moyeu déterminé (X) dans le corps de guidage (1), et où l'extrémité inférieure de l'entretoise transversale (28) forme la butée vers le haut pour la surface interne de la tête de fourche pour la limitation du déplacement de l'élément denté de blocage (26).

5. Système de protection en cas de tonneau selon la revendication 4, **caractérisé par le fait que** l'entretoise transversale (28) comporte un alésage traversant (28a) pouvant recevoir une baguette (29) qui, par une extrémité, est fixée dans la tête de fourche du segment denté de blocage (26) et qui, à l'autre extrémité, libre, comporte un élément actionneur (30) pour un retrait manuel de la baguette (29) et du segment denté de blocage (26).
